# EUROPÄISCHE PATENTSCHRIFT

(11) **EP 2 063 700 B1**
(45) Veröffentlichungstag und Bekanntmachung des Hinweises auf die Patenterteilung: **21.12.2016**
(21) Anmeldenummer: 07801310.9
(22) Anmeldetag: 01.09.2007
(51) Int. Cl.: A01G 9/02

(54) **ENTWÄSSERUNGSELEMENT**
DRAINAGE ELEMENT
ÉLÉMENT DE DRAINAGE

(30) Priorität: 16.09.2006 DE 102006043571
(43) Veröffentlichungstag der Anmeldung: 03.06.2009
(73) Patentinhaber: Väth, Thomas, 64846 Gross-Zimmern (DE)
(72) Erfinder: Väth, Thomas, 64846 Gross-Zimmern (DE)
(74) Vertreter: Reiser & Partner
(86) Internationale Anmeldenummer: PCT/DE2007/001573
(87) Internationale Veröffentlichungsnummer: WO 2008/031396

(56) Entgegenhaltungen:
- DE-U1- 7 906 642
- DE-U1- 20 312 056
- NL-A- 9 300 687

## Beschreibung

Die Erfindung betrifft ein Entwässerungselement für ein Pflanzengefäß.

Aus der DE 203 12 056 U1 ist ein darin als Drainageelement bezeichnetes Entwässerungselement bekannt, das aus einer mit Öffnungen zum Durchtritt von Flüssigkeiten versehenen Hülle und einer Drainagemasse besteht, wobei die von der Hülle umschlossenen Drainagemasse aus mindestens zwei unterschiedlichen wasserspeichernden beziehungsweise wasserleitenden Komponenten besteht.

Die NL 9300687 zeigt ein Substrat für Pflanzen, welches in einem Kasten beziehungsweise rinnenförmigen Behälter angeordnet ist. Das Substrat umfasst ein flächig ausgebildetes Drainagematerial, welches von einer Filtermatte aus Vliesstoff abgedeckt ist.

Die DE 79 06 642 U1 zeigt ein Entwässerungselement für ein Pflanzgefäß, bei dem Verdrängungskörper in Form von Kugeln vorgesehen sind, die in einem Behältnis in Form eines flachen Beutels angeordnet sind.

Unter dem Begriff Geotextilien sind Funktionstextilien bekannt, die im Tiefbau für Funktionen wie Trennen, Filtern und Entwässern verwendet werden. Eines dieser Geotextilien ist eine Endlosmatte, die ein Wirrgeflecht, auch als Krallmatte bezeichnet, zwischen zwei Filtermatten aufweist. Die Endlosmatten sind an ihren Seitenrändern offen ausgeführt und die einzelnen Schichten sind erkennbar. Zumindest eine der Filtermatten steht über, so dass die Filtermatten nebeneinander liegender Geotextilmatten Spalten verhindernd einander überlappen und ein Durchsichern von Sand und dergleichen verhindert ist.

Der Erfindung liegt von daher die Aufgabe zugrunde, ein einfaches und verbessertes Entwässerungselement für ein Pflanzengefäß anzugeben.

Diese Aufgabe wird mit den Merkmalen von Anspruch 1 gelöst. Erfindungsgemäß weist das Entwässerungselement ein Wirrgeflecht und eine das Wirrgeflecht umhüllende Filtermatte auf.

Das Wirrgeflecht weist eine solche Steifigkeit auf, dass auch bei aufliegender Blumenerde das Wirrgeflecht seine Höhe beibehält und nicht zusammengepresst wird. Das Entwässerungselement ist mit einer geringen Aufbauhöhe verstellbar und ermöglicht einen optimalen Wasserabfluss. Damit ist einer Verschlämmung und einer Fäulnis in einem Pflanzengefäß vorgebeugt. Blumengefäße werden nachfolgend auch als Blumenkübel oder Blumentöpfe und das Entwässerungselement auch als Entwässerungskissen, als Drainagepad oder kurz als Drainpad bezeichnet. Die Filtermatte wirkt als Filterschicht und wird deshalb auch als Filterschicht bezeichnet. Das Entwässerungselement verhindert ein Ausschwemmen von Blumenerde und Substrat und damit einen Verlust von Blumenerde und einen Substratverlust und eine Verschmutzung rund um das Pflanzengefäß. Das Substrat ist ein Nährboden. Das Entwässerungselement ist extrem leicht, einfach zu reinigen und wieder verwendbar.

In einfacher Weise ist zumindest ein Endbereich der Filtermatte vernäht. In einer ersten Ausführungsform ist die Filtermatte einteilig ausgeführt. Ein Endbereich ist vernäht, damit die Filtermatte das Wirrgeflecht umhüllt. In einer zweiten Ausführungsform ist die Filtermatte zweiteilig ausgeführt und Endbereiche sind zusammengenäht. Das Entwässerungselement ist als Kissen ausgeführt und damit einfach herstellbar.

In einfacher Weise ist zumindest ein Endbereich der Filtermatte verschweißt. In einer ersten Ausführungsform ist die Filtermatte einteilig ausgeführt. Ein Endbereich ist verschweißt, damit die Filtermatte das Wirrgeflecht umhüllt. In einer zweiten Ausführungsform ist die Filtermatte zweiteilig ausgeführt und Endbereiche sind zusammengeschweißt. Das Entwässerungselement ist als Kissen ausgeführt und damit einfach herstellbar.

In einfacher Weise ist zumindest ein Endbereich der Filtermatte verklebt. In einer ersten Ausführungsform ist die Filtermatte einteilig ausgeführt. Ein Endbereich ist verklebt, damit die Filtermatte das Wirrgeflecht umhüllt. In einer zweiten Ausführungsform ist die Filtermatte zweiteilig ausgeführt und Endbereiche sind zusammengeklebt. Das Entwässerungselement ist als Kissen ausgeführt und damit einfach herstellbar.

Zum besseren Verständnis sind nachfolgend Ausführungsbeispiele anhand der Zeichnung näher erläutert.

Es zeigen
- Fig. 1A: ein scheibenförmiges Entwässerungselement gemäß der Erfindung mit einem Wirrgeflecht und mit einer das Wirrgeflecht umhüllenden zweiteiligen Filtermatte in Draufsicht,
- Fig. 1B: das Entwässerungselement gemäß der Erfindung mit dem Wirrgeflecht und mit der das Wirrgeflecht umhüllenden zweiteiligen Filtermatte in geschnittener Seitenansicht,
- Fig. 2A: ein quaderförmiges Entwässerungselement (nicht Gegenstand der Erfindung) mit einem Wirrgeflecht und mit einer das Wirrgeflecht umhüllenden einteiligen Filtermatte in Draufsicht,
- Fig. 2B: das quaderförmige Entwässerungselement (nicht Gegenstand der Erfindung) mit dem Wirrgeflecht und der das Wirrgeflecht umhüllenden einteiligen Filtermatte in geschnittener Seitenansicht,
- Fig. 3A: ein zweites quaderförmiges Entwässerungselement (nicht Gegenstand der Erfindung) mit einem Wirrgeflecht und mit einer an einer Seite des Wirrgeflechtes befestigten Filtermatte in Draufsicht,
- Fig. 3B: das zweite quaderförmige Entwässerungselement (nicht Gegenstand der Erfindung) mit dem Wirrgeflecht und mit der an einer Seite des Wirrgeflechtes befestigten Filtermatte in Seitenansicht,
- Fig. 4: das scheibenförmige Entwässerungselement gemäß der Erfindung in einem kegelförmigen Pflanzengefäß in geschnittener Seitenansicht.

In den verschiedenen Figuren sind ähnliche oder dieselben Elemente durch gleiche Bezugszeichen bezeichnet.

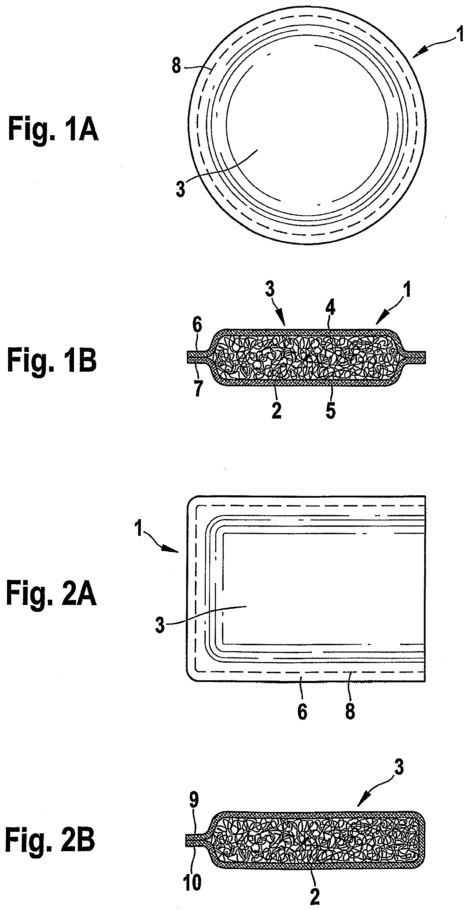

Figuren 1A und 1B zeigen ein scheibenförmiges Entwässerungselement 1 mit einem Wirrgeflecht 2 und einer das Wirrgeflecht 2 umhüllenden zweiteiligen Filtermatte 3. Das Wirrgeflecht 2 ist ebenfalls scheibenförmig ausgeführt und weist zwei runde Stirnflächen und eine Umfangsfläche auf. Die Filtermatte 3 ist zweiteilig mit zwei Filtermattenteilen 4 und 5 ausgeführt. Das erste Filtermattenteil 4 bedeckt die zweite Stirnfläche und weist einen über die Stirnfläche ragenden Endbereich 7 auf. Die äußeren Endbereiche 6 und 7, die an der Umfangsfläche übereinander liegen, sind mittels eines Fadens 8 miteinander vernäht. Alternativ dazu sind die Endbereiche 6 und 7 auch miteinander verklebbar oder verschweißbar.

Figuren 2A und 2B zeigen ein quaderförmiges Entwässerungselement 1 mit einem quaderförmigen Wirrgeflecht 2, das von einer einteiligen Filtermatte 3 umhüllt ist. Das Wirrgeflecht 2 weist zwei einander abgewandte Seiten mit größeren Oberflächen und vier Schmalseiten mit kleineren Oberflächen auf. Die Filtermatte 3 ist so um das Wirrgeflecht 2 herumgelegt, dass die beiden Seiten mit der größeren Oberfläche und einer Schmalseite bedeckt sind. Die Filtermatte 3 weist einen über die drei Seiten ragenden umlaufenden äußeren Endbereich 6 auf, der vernäht ist. Teile 9 und 10 des einen Endbereiches 6 kommen an drei Schmalseiten aufeinander zu liegen und sind dort zusammengenäht.

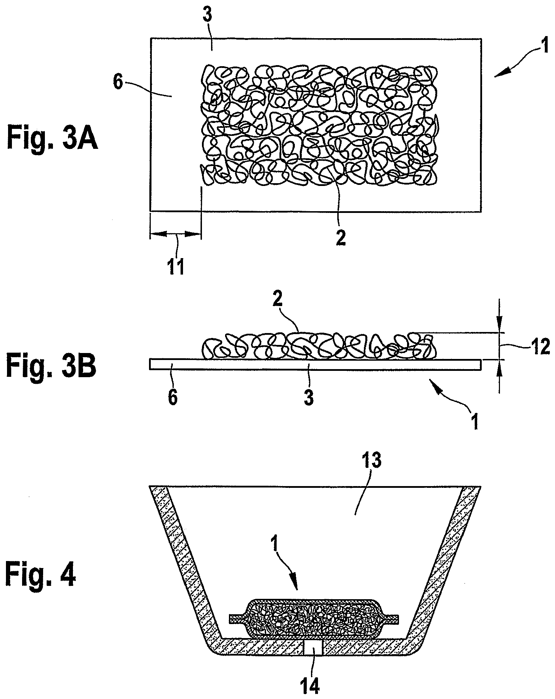

Figuren 3A und 3B zeigen ein zweites quaderförmiges Entwässerungselement 1 mit einem quaderförmigen Wirrgeflecht 2 und einer Filtermatte 3. Die Filtermatte 2 bedeckt eine Seite des Wirrgeflechtes 2 und weist einen überstehenden und über das Wirrgeflecht 3 hinausragenden Endbereich 6 auf. Eine Länge 11 des Endbereiches 6 ist in einer solchen Größenordnung gewählt, dass ein Wert dieser Länge größer als ein Wert einer Höhe 12 des Wirrgeflechtes 2 ist.

Figur 4 zeigt das scheibenförmige Entwässerungselement 1, das in einem runden Blumentopf 13 ist. Ein Blumentopfabfluss 14 des Blumentopfes 13 ist mittels des Entwässerungselementes 1 abgedeckt. Wird nunmehr der Blumentopf 13 mit Blumenerde, Substrat und einer Pflanze aufgefüllt, so bleibt die Höhe des Entwässerungselementes 1 erhalten und beim Begießen des Blumentopfes 13 kann das Wasser durch das Entwässerungselement 1 und den Blumentopfabfluss 14 entweichen.

## Patentansprüche

1. Entwässerungselement (1) für ein Pflanzengefäß (13, 15), das als Kissen ausgeführt ist, **dadurch gekennzeichnet, dass** das Entwässerungselement (1) scheibenförmig ausgebildet ist und ein scheibenförmiges Wirrgeflecht (2) und eine das scheibenförmige Wirrgeflecht (2) umhüllende Filtermatte (3) aufweist, wobei das Wirrgeflecht (2) eine solche Steifigkeit aufweist, dass dieses auch bei aufliegender Blumenerde seine Höhe beibehält.

2. Entwässerungselement nach Anspruch 1, **dadurch gekennzeichnet, dass** zumindest ein Endbereich (6, 7) der Filtermatte (3) vernäht ist.

3. Entwässerungselement nach Anspruch 1, **dadurch gekennzeichnet, dass** zumindest ein Endbereich (6, 7) der Filtermatte (3) verschweißt ist.

4. Entwässerungselement nach Anspruch 1, **dadurch gekennzeichnet, dass** zumindest ein Endbereich (6, 7) der Filtermatte (3) verklebt ist.

## Claims

1. Drainage element (1) for a plant container (13, 15) that is embodied as a cushion, **characterized in that** the drainage element (1) is embodied in a disc-shaped manner and comprises a disc-shaped tangled mesh (2) and a filter mat (3) that encases the disc-shaped tangled mesh (2), wherein the tangled mesh (2) comprises such a rigidity that said tangled mesh maintains its height even when potting soil is lying on it.

2. Drainage element according to Claim 1, **characterized in that** at least one end region (6, 7) of the filter mat (3) is stitched.

3. Drainage element according to Claim 1, **characterized in that** at least one end region (6, 7) of the filter mat (3) is welded.

4. Drainage element according to Claim 1, **characterized in that** at least one end region (6, 7) of the filter mat (3) is adhered.

## Revendications

1. Élément de drainage (1) pour un bac à plantes (13, 15), lequel est réalisé comme coussin, **caractérisé en ce que** l'élément de drainage (1) est réalisé en forme de disque et **en ce qu'**il présente un tressage emmêlé (2) et un tapis filtrant (3) enveloppant le tressage emmêlé (2), dans lequel élément de drainage le tressage emmêlé (2) présente une rigidité telle que celui-ci conserve sa hauteur lorsque du terreau est posé dessus.

2. Élément de drainage selon la revendication 1, **caractérisé en ce qu'**au moins une région terminale (6, 7) du tapis filtrant (3) est cousue.

3. Élément de drainage selon la revendication 1, **caractérisé en ce qu'**au moins une région terminale (6, 7) du tapis filtrant (3) est soudée.

4. Élément de drainage selon la revendication 1, **caractérisé en ce qu'**au moins une région terminale (6, 7) du tapis filtrant (3) est collée.
